# EUROPEAN PATENT SPECIFICATION

(11) **EP 0 394 025 B1**
(45) Date of publication and mention of the grant of the patent: **15.09.1993**
(21) Application number: 90304174.7
(22) Date of filing: 19.04.1990
(51) Int. Cl.: F16J 15/32

(54) **Annular seals**
Ringförmige Dichtungen
Joints annulaires

(30) Priority: 19.04.1989 GB 8908835
(43) Date of publication of application: 24.10.1990
(73) Proprietor: DOWTY SEALS LIMITED, Tewkesbury Gloucestershire GL20 8JS (GB)
(72) Inventor: Stanley, Clive John, Tewkesbury, Gloucestershire, GL20 6JL (GB)
(74) Representative: Hogg, Jeffery Keith

(56) References cited:
- DE-A- 221 526
- US-A- 1 570 186

## Description

### Technical Field

This invention relates to annular seals such as rotary shaft seals.

Rotary shaft seals are commonly known in which an annular sealing element is secured at its outer edge to a housing and engages the shaft at its inner edge. The outer edge of the sealing element is received in a channel in the housing and the housing is crimped to partially close the channel and grip the sealing element (see e.g. DE-A-3221526). However, there is a problem with this method of securing the sealing element in that it is not always sufficient to hold the sealing element against the circumferential forces exerted on it by the rotating shaft, and the sealing element can rotate with the shaft. This damages the sealing element and results in seal failure.

### Disclosure of the Invention

An object of the present invention is to provide an improved rotary shaft seal in which the sealing element is held more securely against rotation.

This is achieved according to the invention by providing an annular channel in one member to receive a radial edge of the annular sealing element, said one member having a radially extending lip portion that forms one side of the channel and is crimped axially inwards to grip the sealing element, characterised in that said lip portion is formed with a plurality of notches spaced around its circumference so as to define a serrated edge which grips the sealing element when the lip is crimped inwards. Thus the notches help to enhance the grip of the lip on the sealing element so that it resists rotational forces exerted on it by contact of its radially free edge with another member that rotates relative to said one member.

The notches may be formed by grooves in a radial face of said lip portion that forms said one side of the channel, or in an axially extending face of the lip portion so as to open onto said one side of the channel.

### Description of the Drawings

The invention will now be described by way of example with reference to the accompanying drawings in which:
Figure 1 is half an axial section of a rotary seal according to a first embodiment of the invention,
Figure 2 is an axial end view of the seal in Figure 1,
Figure 3 is a side elevation of a tool used to cut grooves in the lip that grips the sealing element in Figure 1,
Figure 4 is half an axial section of a rotary seal according to a second embodiment of the invention,
Figure 5 is an axial end view of the seal in Figure 4,
Figure 6 is a side elevation of a tool used to punch grooves in the lip that grips the sealing element in Figure 4, and
Figure 7 is an axial end view of the tool of Figure 6.

### Best Mode of Carrying Out the Invention

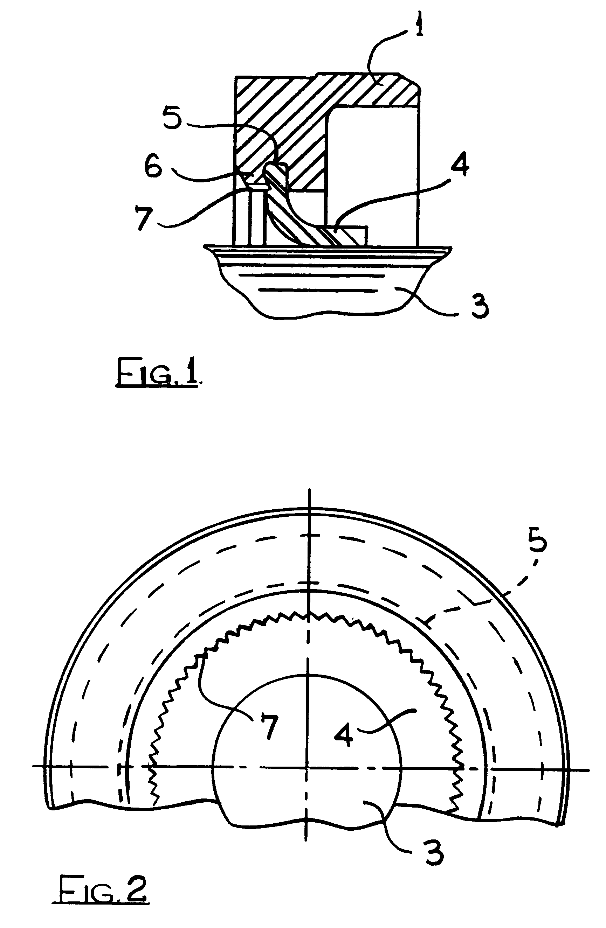

The rotary seal illustrated in Figure 1 comprises an outer annular housing 1 that fits over a rotary shaft 3. An annular sealing element 4 is provided between the housing 1 and shaft 3 and comprises a planar ring of polymeric material. The outer radial edge of the sealing ring 4 is located in an annular channel 5 in the housing 1 and is retained therein by a lip portion 6 of the housing that forms one side of the channel and is crimped inwards to partially close the channel and grip the sealing ring. The sealing ring 4 extends radially inwards and curves axially so as to engage the shaft 3 in face-to-face sealing contact at its inner edge.

The annular channel 5 is of rectangular section before the lip portion 6 is crimped. Also, the inner edge of the lip portion 6 is pre-formed with a plurality of grooves 7 extending axially across its full width and spaced regularly around its inner circumference. Figures 1 and 2 show these grooves 7 in a slightly exaggerated form for reasons of clarity, but in practice they may be relatively shallow, typically having a depth of 0.1 to 0.2 mm. Further, these grooves are typically V-shaped having a base angle of 90 degrees. Typically, the grooves may be equispaced around the inner circumference of the lip portion 6 at a circular pitch of between 1 and 1.5 mm.

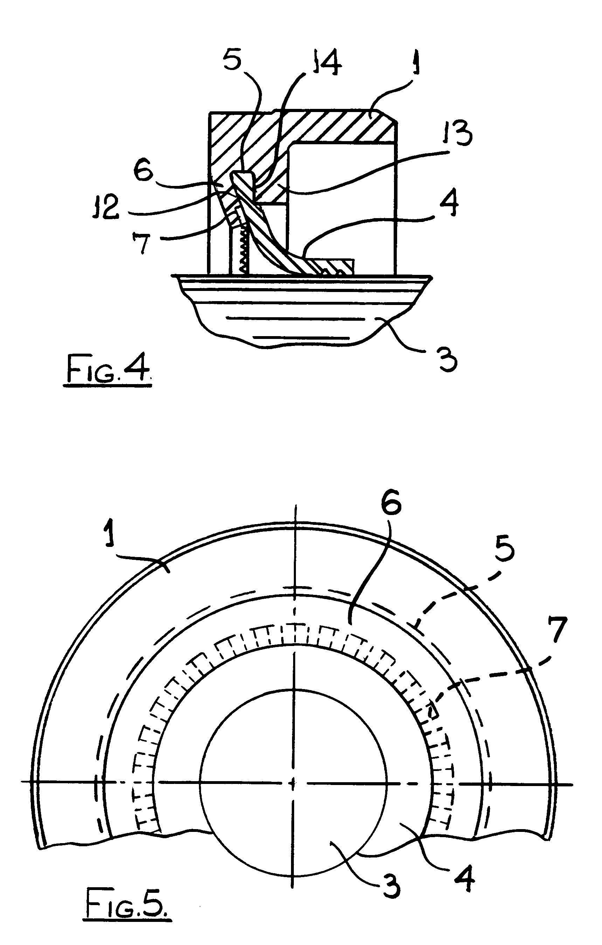

Figure 3 illustrates a tool that could be used to form the grooves 7 comprising a disc portion 8 provided with a series of ridges 9 around its outer annular peripheral surface that are directed parallel to the axis of the disc and are shaped to form the grooves 7 when inserted axially into the open end of the housing 1 adjacent the lip portion 6. A lead-in portion 10 of the tool, coaxial with the disc portion 8, helps to locate the tool in the housing 1 during insertion. A spigot 11 on the tool is provided to control the axial depth of insertion of the tool in the housing.

During assembly of the sealing ring 4 in the channel 5, a crimping tool is used having a frusto-conical face that engages the axial outer face of the lip portion 6 and forces it inwardly to partially close the channel 5, as shown in Figure 1. It will be appreciated that the inner ends of the grooves 7 define a serrated edge where they open onto the inner face of the lip portion 6, and that this cooperates with the inner edge of the sealing ring 4 to enhance gripping of the sealing ring, thereby more securely restraining it against the forces of rotation exerted on it by frictional contact with the shaft 3.

The second embodiment of the invention illustrated in Figure 4 comprises an outer annular housing 1, a rotary shaft 3, an annular sealing ring 4 located at its outer edge in an annular channel 5 in the housing 1 and retained therein by a crimped lip portion 6. This general construction is similar to that of the first embodiment shown in Figure 1, however, it differs in the manner in which grooves 7 are provided in the lip portion 6 to grip the sealing ring 4 when the lip portion is crimped inwards to partially close the channel 5.

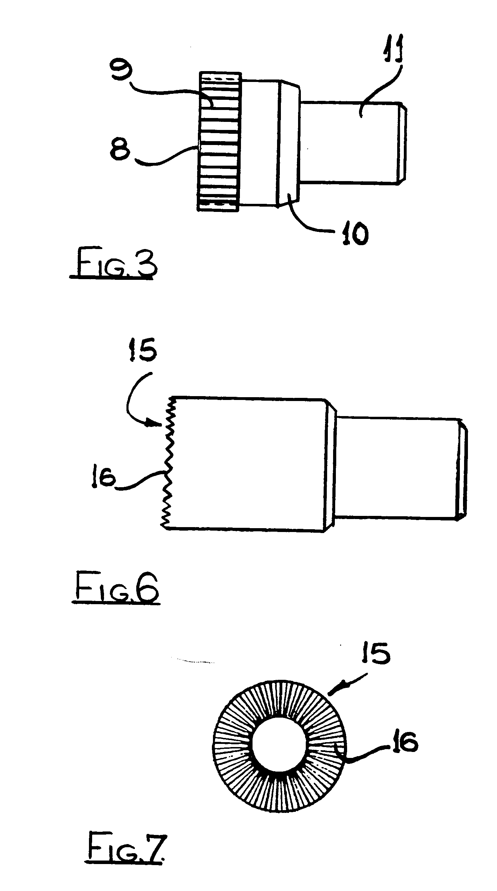

As shown in Figures 4 and 5, the lip portion 6 having a side wall 12 defining one side of the channel 5, extends radially inwards beyond the adjacent portion 13 of the housing 1 that forms the opposite side wall 14 of the channel 5. The side wall 12 of the lip portion 6 is formed with a plurality of radially extending grooves 7 around its circumference using the tool shown in Figures 6 and 7. This tool has an end face 15 formed with a plurality of radially extending ridges 16 that form the corresponding pattern of grooves 7 in the side wall 12 when the tool is inserted axially into the housing in a pre-forming coining operation. The actual form of the grooves may typically comprise grooves 0.1 to 0.2mm deep having V-shape cross-sections with 90 degree base angles, and spaced on a pitch of between 1 and 1.5mm around the innermost periphery of the lip portion 6.

After the sealing ring 4 is inserted into the channel 5 in the housing 1, the lip portion 6 is crimped inwards against the sealing ring by a suitable crimping tool. The grooves 7 on the inner side wall 12 then grip the sealing ring, especially around the partially closed mouth of the channel 5 where the grooves effectively form a serrated gripping edge.

## Claims

1. A rotary shaft seal comprising one member (housing 1 or shaft 3) including an annular channel (5) to receive a radial edge of an annular sealing element (4) and a radially extending lip portion (6) that forms one side of the channel (5) and is crimped axially inwards to grip the sealing element (4), characterised in that said lip portion (6) is formed with a plurality of notches (7) spaced around its circumference so as to define a serrated edge which grips the sealing element (4) when the lip is crimped inwards, thereby restraining the sealing element (4) against rotational forces.

2. A seal as claimed in claim 1 in which a radial face of said lip portion forming said one side of the channel is formed with said notches in the form of a plurality of radially extending grooves.

3. A seal as claimed in claim 2 in which said lip portion extends radially beyond an adjacent portion of said one member that forms a side of the channel opposite said one side.

4. A seal as claimed in claim 3 in which said grooves are formed in that part of the lip portion that extends beyond the adjacent portion of said one member.

5. A seal as claimed in claim 1 in which the notches are formed as grooves in an axially extending face of the lip portion so as to open onto said one side of the channel.

6. A seal as claimed in any one of the preceding claims in which said one member (housing 1) has a central bore to receive a rotary shaft (3) for engagement by said sealing element.

7. A method of securing a radial edge of an annular sealing element (4) in an annular channel (5) of one member (housing 1 or shaft 3) of a seal assembly as being defined in claim 1 comprising the steps of forming a plurality of notches (7) around the circumference of a lip portion (6) of said one member that defines one side of said channel (5)so as to define a serrated edge, and crimping the lip portion (6)axially inwards to partially close said channel (5)and cause said serrated edge to grip the sealing element (4).

8. A method as claimed in claim 7 in which the lip portion extends radially beyond an adjacent portion of said one member that forms the other side of said channel, and in which a tool is moved axially of said one member to form said notches in said one side of the lip portion that extends radially beyond the other side, the tool having a series of radially extending ridges that engage said one side in a forming operation.

9. A method as claimed in claim 7 in which the notches are formed as grooves in an axially extending face of the lip portion so as to open onto said one side of the channel, a tool being moved axially of said one member so that axially extending ridges formed on an annular surface of the tool engage said axially extending face of the lip portion in a forming operation.

10. A method as claimed in claim 8 or 9 in which the tool is inserted axially through a central bore of said one member (housing 1) in said forming operation, said central bore being adapted to receive a rotary shaft (3) for engagement by said sealing element.

## Patentansprüche

1. Radialdichtung umfassend ein Teil (ein Gehäuse (1) oder eine Welle (3)) mit einem ringförmigen Kanal (5) zur Aufnahme eines radialen Randes eines ringförmigen Dichtelementes (4) und einem sich radial erstreckenden Lippenbereich (6), der die eine Seite des Kanals (5) bildet und zum Halten des Dichtelementes (4) axial nach innen gefalzt ist,
**dadurch gekennzeichnet,** daß der Lippenbereich (6) mit einer Vielzahl von Einkerbungen (7) versehen ist, die so um dessen Umfang verteilt sind, daß sie einen gezahnten Rand bilden, der das Dichtelement (4) hält, wenn der Lippenbereich (6) nach innen gefalzt wird und so das Dichtelement (4) gegen Rotationskräfte sichert.

2. Dichtung nach Anspruch 1, wobei an einer radiale Seite des die eine Seite des Kanals bildenden Lippenbereichs Einkerbungen in Form einer Vielzahl von sich radial erstreckenden Rillen vorgesehen sind.

3. Dichtung nach Anspruch 2, wobei sich der Lippenbereich radial über einen benachbarten, die andere gegenüberliegende Seite des Kanals bildenden Abschnitt des Teils hinaus ersteckt.

4. Dichtung nach Anspruch 3, wobei die Rillen an jenem Teil des Lippenbereichs geformt sind, der sich über den benachbarten Abschnitt des einen teils hinaus erstreckt.

5. Dichtung nach Anspruch 1, wobei die Einkerbungen als Rillen auf einer sich axial erstreckenden Fläche des Lippenbereichs ausgebildet und zu der einer Seite des Kanals hin offen sind.

6. Dichtung nach einem der vorstehenden Ansprüche, wobei das Teil (Gehäuse (1)) zur Aufnahme einer mit der Dichtung in Verbindung stehenden Welle (3) eine mittige Bohrung aufweist.

7. Verfahren zum Sichern eines radialen Randes eines ringförmigen Dichtelementes (4) in einem ringförmigen Kanal (5) eines teils (Gehäuse (1) oder Welle (3)) einer Dichteinheit nach Anspruch 1, umfassend folgende Schritte: Formen einer Vielzahl von Einkerbungen (7) auf dem Umfang des die eine Seite des Kanals bildenden Lippenbereichs des einen Teiles zur Bildung eines gezahnten Randes, axiales Falzen des Lippenbereichs (6) nach innen, damit der Kanal (5) teilweise verschlossen wird und der gezahnte Rand dem Dichtelement (4) einen festen Halt verleiht.

8. Verfahren nach Anspruch 7, wobei sich der Lippenbereich radial über einen benachbarten, die andere Seite des Kanals bildenden Abschnitt des einen Teils hinaus erstreckt, und wobei ein werkzeug zum Formen der Rillen auf der einen, sich radial über die andere Seite hinaus erstreckenden Seite des Lippenbereichs, axial zu dem Teil bewegt wird, wobei das werkzeug eine Reihe von Rippen aufweist, die während eines Formvorganges mit der einen Seite in Eingriff gelangen.

9. Verfahren nach Anspruch 7, wobei die Einkerbungen als Rillen auf einer sich axial erstreckenden Fläche des Lippenbereichs ausgebildet sind und sich nach einer Seite des Kanals hin öffnen, wobei ein werkzeug axial zum Teil bewegt wird, so daß sich die auf der ringförmigen Oberfläche des Werkzeuges befindlichen, sich axial erstreckenden Rippen mit der sich axial erstreckenden Fläche des Lippenbereichs in einem Formvorgang in Eingriff treten.

10. Verfahren nach Anspruch 8 oder 9, wobei das Werkzeug während des Formvorganges axial durch eine mittige Bohrung das Gehäuseteils (1) eingeführt wird und die mittige Bohrung so gewählt ist, daß sie eine mit dem Dichtelement in Eingriff zu bringende Welle (3) aufnehmen kann.

## Revendications

1. Joint d'étanchéité d'arbre rotatif comprenant une première partie (carter 1 ou arbre 3) contenant un canal annulaire (5) servant à loger un bord radial d'un élément d'étanchéité annulaire (4) et une partie formant lèvre (6) qui s'étend radialement et forme un premier côté du canal (5) et est serti axialement vers l'intérieur de manière à retenir l'élément d'étanchéité (4), caractérisé en ce que ladite partie formant lèvre (6) comporte une pluralité d'encoches (7) espacées sur sa circonférence de manière à définir un bord crênelé qui saisit l'élément d'étanchéité (4) lorsque la lèvre est sertie sur le côté intérieur, qui protège l'élément d'étanchéité (4) vis-à-vis de forces de rotation.

2. Joint d'étanchéité selon la revendication 1, dans lequel une face radiale de ladite partie formant lèvre constituant ledit premier côté du canal comporte lesdites encoches réalisées sous la forme d'une pluralité de rainures radiales.

3. Joint d'étanchéité selon la revendication 2, dans lequel ladite partie formant lèvre s'étend radialement au-delà d'une partie dudit élément, qui constitue un côté du canal, situé à l'opposé dudit premier côté.

4. Joint d'étanchéité selon la revendication 3, dans lequel lesdites rainures sont ménagées dans la zone de la partie formant lèvre, qui s'étend au-delà de la zone adjacente de ladite première partie.

5. Joint d'étanchéité selon la revendication 1, dans lequel les encoches sont réalisées sous la forme de rainures qui sont disposées dans une face axiale de la partie formant lèvre de manière à déboucher dans ledit premier côté du canal.

6. Joint d'étanchéité selon l'une quelconque des revendications précédentes, dans lequel ladite première partie (carter 1) possède un perçage central servant à loger un arbre rotatif (3), contre lequel est destiné à s'appliquer ledit élément d'étanchéité.

7. Procédé pour fixer un bord radial d'un élément d'étanchéité annulaire (4) dans un canal annulaire (5) d'une première partie (carter 1 ou arbre 3) d'un ensemble d'étanchéité tel que défini dans la revendication 1, comprenant les étapes consistant à former une pluralité d'encoches (7) autour de la circonférence d'une partie formant lèvre (6) de ladite première partie, qui définit un premier côté dudit canal (5) en formant un bord crênelé, et à sertir la partie formant lèvre (6) axialement vers l'intérieur de manière à fermer partiellement ledit canal (5) et amener ledit bord crênelé à saisir l'élément d'étanchéité (4).

8. Procédé selon la revendication 7, dans lequel la partie formant lèvre s'étend radialement au-delà d'une zone adjacente de ladite première partie, qui constitue l'autre côté dudit canal, et dans lequel un outil est déplacé dans la direction axiale de ladite première partie pour former lesdites encoches dans ledit premier côté de la partie formant lèvre, qui s'étend radialement au-delà de l'autre côté, l'outil possédant une série de nervures radiales qui s'engagent dans ledit premier côté selon une opération de formage.

9. Procédé selon la revendication 7, selon lequel les encoches sont réalisées sous la forme de rainures dans une face axiale de la partie formant lèvre de manière à s'ouvrir dans ledit premier côté du canal, un outil étant déplacé dans la direction axiale de ladite première partie de telle sorte que des nervures axiales formées sur une surface annulaire de l'outil s'engagent dans ladite face axiale de la partie formant lèvre, selon une opération de formage.

10. Procédé selon la revendication 8 ou 9, selon lequel l'outil est inséré axialement dans un perçage central de ladite première partie (carter 1) lors de ladite opération de formage, ledit perçage central étant adapté pour recevoir un arbre rotatif (3), contre lequel est destiné à s'engager ledit élément d'étanchéité.
